# EUROPEAN PATENT SPECIFICATION

(11) **EP 1 101 518 B1**
(45) Date of publication and mention of the grant of the patent: **23.05.2007**
(21) Application number: 01200048.5
(22) Date of filing: 05.08.1996
(51) Int. Cl.: B01D 33/067, B01D 33/11

(54) **Rotating drum filter and method for filtering a fluid using said filter**
Filter mit drehbarer Trommel und und dessen Verwendung zum Filtrieren eines Fluids
Filtre à tambour tournant et procédé de filtration d' un fluide l'utilisant

(43) Date of publication of application: 23.05.2001
(62) Divisional of application: 96926020.7
(73) Proprietor: Verduijn, Norbertus, 3832 RJ Leusden (NL); van Lente, Petrus Johannes Wilhelmus, 3768 AJ Soest (NL)
(72) Inventor: Verduin, Norbertus, 3832 RJ Leusden (NL)
(74) Representative: Prins, Adrianus Willem

(56) References cited:
- EP-A- 0 671 215
- FR-A- 1 030 533
- FR-A- 2 584 948
- US-A- 2 798 609
- US-A- 3 527 349
- US-A- 4 990 249

## Description

The invention relates to a filter drum. According to the invention, such a drum filter is characterized by the features of claim 1.

Such a drum filter has a simple construction and requires little maintenance. It enables an economically and environmentally advantageous manner of filtering a fluid, in particular liquid or gases such as water or air, while substantially dry material can be discharged therefrom during use.

In a first advantageous embodiment, a drum filter according to the invention is characterized by the features of claim 3.

Experiments have demonstrated that the above-described effect of filtering is achieved in a particularly advantageous manner by means of a cloth formed from screen-printing cloth, on the inside of the filter drum. In this connection, screen-printing cloth should at least be understood to mean monofilament plastic woven cloth, for instance manufactured from polyester, polyvinylidene difluoride, polyamide, polyethylene terephthalate. The screen-printing cloth has mesh sizes of, for instance, between 1 and 1000 mm, preferably between 1 and 100 mm, more in particular between 1 and 25 mm. Such screen-printing cloth is for instance marketed under the registered tradenames of Filtryl and Scrynel.

EP-A-671,215 discloses a filter drum for centrifugal filtering, comprising a filter material lining the inside of the drum, said filter material being fixed by at least one ring extending on the inside surface of the filtering cloth.

FR-A- 1,030,53 discloses a filter drum lined on the inside with a filter material, wherein the filtering cloth extends throughout the inside surface of the drum and is retained there as the ends of the filtering cloth have been folded over the longitudinal edges of the wall and have thus been fixed. This moreover offers the advantage that no fastening means for the cloth extend from the inside surface of the filtering cloth, so that, during use, the roll of filtered-out material cannot be obstructed or damaged thereby.

By contrast, the clamping means of the present invention offer the advantage that the screening cloth can be clamped within the drum and be removed therefrom, if necessary, in a particularly simple manner. This means that the cloth need not be folded over the end edges of the drum. An important advantage reached thereby is that when the cloth is being fitted, the drum can be disposed on an end edge without this involving the cloth lying between the drum and the set-up surface, so that damage is prevented in a simple manner. Moreover, drums can thereby be connected to each other or to feed and discharge apparatuses in a simpler manner, because damage to the cloth is readily prevented. A further advantage of this manner of attachment is that in the case of connected drums, the cloth can integrally extend through more than one drum, so that seams are prevented. Consequently, the particles to be filtered out cannot pass through such seams between the cloth and the drum, or flow away through the connection between the drum ends.

Further, a filter drum according to the invention can be characterized by the features of claim 6.

Due to the fact that the depressed edges of the perforations extend outwards, the screening cloth is prevented from contacting them, so that damages are avoided.

In a further advantageous embodiment, a filter drum according to the invention is characterized by the features of claim 7.

The frusto-conical shape of the filter drum and the approximately vertical axis of rotation offer the advantage that this allows using the complete surface of the filtering cloth. Moreover, gravity can be used more efficiently for the feed-through of the filtered-out particles.

Coupling of a number of filter drums according to the invention one behind the other offers the advantage that a relatively long drum filter can be obtained with relatively short filter drums. Accordingly, for instance a portion of the drum filter can be replaced if damages are caused to, for instance, the filtering cloth, and, moreover, the length of the drum filter can readily be adapted to the filtering circumstances. Further, such an embodiment offers the advantage that relatively short spans of the filtering cloth are necessary, so that the filtering cloth can be held more properly adjacent the wall of the or each drum and the risk of damages thereto is reduced.

In a further advantageous embodiment, a drum filter according to the invention is characterized by the features of claim 13.

As the occasion arises, it may be desirable if the material filtered from the fluid or the roll formed therefrom be passed through the drum filter in the longitudinal direction of the or each filter drum more quickly than is possible under the influence of the flow of the fluid and/or gravity, or to have this roll in each case assume a specific position within the or each drum. For that purpose, conveying means can be used that for instance push up the material or force it into a specific position.

The invention further relates to a cleaning assembly that is characterized by the features of claim 15.

The invention relates to a method for filtering solid particles from a fluid, of the type described in claim 16.

In a known method, a flow of liquid is fed to the outside of a filter drum which can rotate about an approximately horizontally disposed longitudinal axis. The filter drum has its outside stretched over with a fine-meshed cloth which passes the liquid but retains the solid particles present in the flow. During use, the solid particles deposit on the cloth and are left thereon. When the drum is rotated, the solid particles are carried along. The drum has at least its bottom side accommodated in a basin wherein a part of the liquid is received. The solid particles depositing on the outside of the drum are carried along through the basin and are partly left therein. Consequently, the basin is quickly contaminated by the solid particles, while a part of the solid particles is also constantly left on the cloth, causing the filtering action of the filter drum to diminish quickly during use.

To overcome this drawback, it was proposed to fit a scraper against the filter drum, on the outside thereof, whereby at least a part of the solid particles is removed from the cloth. As a result, the filtering cloth is kept clean for a longer time, but this is also costly and maintenance-prone. Moreover, there is the risk of the filtering cloth being damaged by the scraper or of the solid particles being pressed into the meshes of the filtering cloth by the scraper, which has an adverse effect on the filtering cloth.

A further drawback of this known method is that the filter drum has only a relatively short operating length, while the water to be filtered should be fed over the entire length. After all, the water will not move along the outside of the filter drum to one of the ends, but will directly run downwards along the outer circumference. Consequently, the available space is utilized in a little effective manner and, also, the filtering action of the apparatus used is difficult to control and check. A further drawback of this known method is that the solid particles that are filtered from the flow of medium contain relatively much liquid, also after removal from the drum. This particularly results from the fact that there is constantly a new feed of medium over the particles depositing on the filtering cloth. This liquid should then be recovered from the particles in a different manner to enable reuse thereof in, for instance, a washing process.

An object of the invention is to provide a method of the type described here above, wherein the drawbacks are avoided, while the advantages thereof are maintained. To that end, a method according to the invention is characterized by the features of claim 16.

Because in a method according to the invention, the fluid to be filtered is fed to the inside of the filter drum and can pass outside through the wall, the filter drum can be disposed substantially above a receptacle or like receiving means for the filtered fluid. The filtering material on the inside of the drum provides that the material that is filtered from the fluid by means thereof remains within the drum, at least does not reach the outside of the wall of the drum. Surprisingly, it has been found that the material filtered from the fluid tends to deposit on the filter material first, and, when used continuously, possibly also on the material already deposited on the filter material. Partly because of the slight sucking action of the flow of fluid flowing outwards through the filter drum and the centrifugal force occurring as a result of the rotation of the filter drum, the particles are pressed against the filter material and slightly carried along in the direction of rotation. Before the carried-along particles are carried along too far, they fall back under the influence of gravity, while rolling or at least moving over the particles that lie behind them. In particular moist particles and/or particles exhibiting cohesion otherwise will thus be able to adhere to one another. This creates an accumulation of filtered-out material that is slightly propelled by the flowing fluid in the direction of the second end of the filter drum, with the continuous discharge of the fluid from the filtered particles. This means that the material filtered from the fluid is passed from the drum, at the second end, substantially automatically and almost dry, while the meshes of the cloth remain open and hence the filtering action of the filter drum is maintained for a long time.

In particular when using a method according to the invention is used for filtering gases, it is preferred when the gases are sucked or pressed through the cloth by means of a pressure difference between the inside and outside of the drum.

As filter material, filtering cloth is preferred, but another type of material can be used as well, for instance open cell band-shaped material, (metal) sponge-shaped material, and the like.

In an advantageous embodiment, a method according to the invention is further characterized by the features of claim 22.

When using this method for filtering particles that may exhibit mutual coherence, for instance filamentary particles, charged particles, clinging or hooking particles and the like, from a fluid, for instance water or gas, the particles will exhibit mutual coherence during use of the drum, which becomes stronger in the direction of the second end of the drum, while forming a sort of roll. Meanwhile, at the end located adjacent the first end of the filter drum, newly filtered-out material deposits on the cloth and on the material already located in the roll. In this manner, by means of a method according to the invention, an essentially endless roll of material is obtained.

As the occasion arises, it may be advantageous to add fibers or otherwise adherent particles to the fluid to be filtered, prior to the filtering operation, in order to obtain a stronger mutual adhesion of the filtered-out material. If necessary, the added particles, for instance cellulose fibers, can be removed again afterwards.

The end of the roll remote from the first end of the filter drum and located adjacent the second end of the filter drum, at least in the vicinity of the bottom side thereof as a result of gravity, is forced beyond the second end of the filter drum. This is inter alia caused by the fact that at the opposite end of the roll, new material is deposited all the time, as described hereinabove. The roll is thus displaced, as it were. This offers the advantage that the roll removes itself from the filter drum or can at least be readily engaged from the outside of the filter drum to enable its removal therefrom. During the displacement thereof in the longitudinal direction of the drum, the material forming the roll is cleared from any fluid included therein or clinging thereto, so that the material passes out of the drum filter relatively dry and clean. In this connection, a roll should be regarded as a more or less coherent whole of material having for instance a cylindrical shape or the shape of a hose or plate. All fluid passes outside through the wall of the drum substantially clean, at least cleared from solid particles, and is suitable for, for instance, reuse.

Because in a method according to the invention, the material filtered from the fluid is removed from the filter drum substantially automatically, the drum filter can be kept in operation almost continuously, while maintaining its filtering qualities. Moreover, the filtering cloth is outwardly protected by the wall of the filter drum, so that damage to the cloth is prevented in a simple manner. Also, the material is prevented from settling in the cloth. In addition, the advantage is achieved that, if so desired, the bearing and drive of the or each filter drum can be arranged in a simple manner with rolling devices abutting against, for instance, the outside of the wall.

The feed of the full flow of fluid to one end of the drum, rather than along the entire outside thereof as in the known method, further offers the advantage that, as a result, the method can be checked in a simple manner and the capacity of the filtering apparatus to be used is moreover readily adaptable to the supply of contaminated fluid. After all, for instance the length of the filtering drum is readily adjustable without also requiring adjustment of the feed means for the fluid.

In an advantageous embodiment, a method according to the invention is characterized by the features of claim 18.

The inclined position of the filter drum brings about a conveying action on the material in the direction of the second end of the drum, which conveying action is enhanced by gravity.

In further elaboration, a method according to the invention is characterized by the features of claim 19.

One of the objects that is to be attained is a proper separation of the fluid and the solid particles included therein, such as textile fibers. In this connection, it is particularly advantageous when the material filtered from the fluid carries along a minimum amount of fluid outside the drum filter. By optimally adjusting to each other at least the speed of rotation and the drum length on the one hand, and the flow velocity and throughput of the fluid on the other, substantially dry material can be discharged from the filter drum by a method according to the invention, while the complete throughput of fluid can be reused, which in terms of, inter alia, environment and economy has considerable advantages.

In further elaboration, a method according to the invention is further characterized by the features of claim 20.

The friction means provide that the particles filtered from the fluid are not carried along too far by the cloth, which can be important in particular for particles exhibiting a strong adhesion relative to the cloth, for instance as a result of charge. The particles are retained by the friction means, so that other particles can for instance deposit thereon and are forced in the direction of the second end of the drum.

Further elaborations of a method, drum filter, assembly and filter drum are described in the subclaims and the specification.

In explanation of the invention, exemplary embodiments of the method and assembly will hereinafter be described with reference to the accompanying drawings. In these drawings:
Fig. 1 schematically shows a cleaning assembly according to the invention;
Fig. 2 is a cross-sectional view of a drum filter taken on the line II-II in Fig. 1;
Fig. 3 shows in an enlarged front view a connection between the longitudinal edges of a filtering cloth for lining a filter drum;
Fig. 4 is a side elevation, partly in cross-section, of an alternative attachment of a filtering cloth in a filter drum;
Fig. 5 is a side elevation of an alternative embodiment of a drum filter according to the invention;
Fig. 6 is a cross-sectional view of an alternative embodiment of a drum filter according to the invention;
Fig. 7 shows a filter drum in a further alternative embodiment; and
Fig. 8 shows in front view a further alternative embodiment of a cleaning assembly according to the invention.

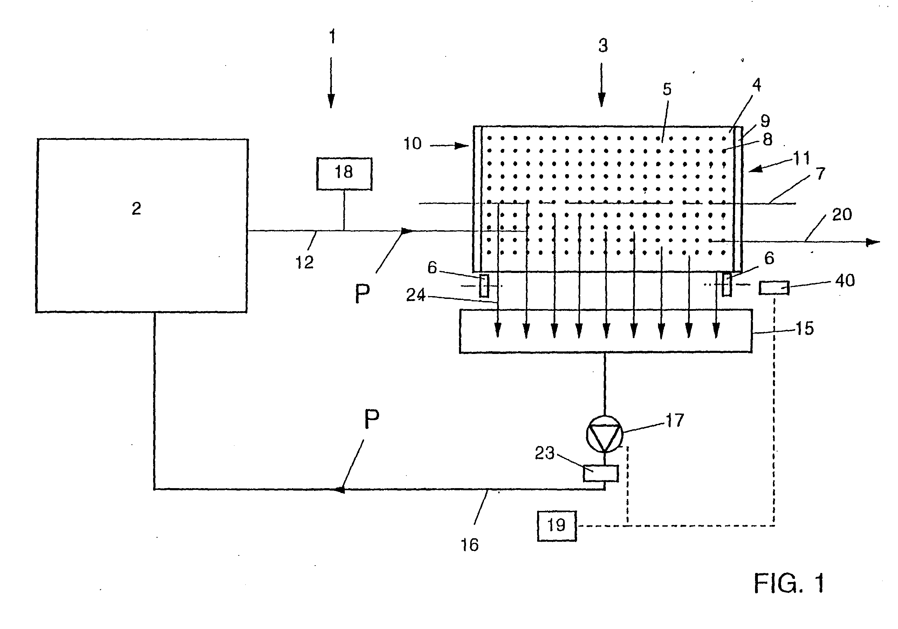

Fig. 1 schematically shows a cleaning assembly 1 according to the invention, comprising at least a cleaning apparatus 2, such as for instance an industrial washing machine, and a drum filter 3 for treating a liquid fluid coming from the cleaning apparatus 2.

In the drawing, embodiments of a cleaning apparatus and a method are described on the basis of liquids to be cleaned, in particular on the basis of a washing apparatus for textile, utilizing water as liquid medium. However, all these embodiments are also suitable for filtering gases such as air and industrial gases.

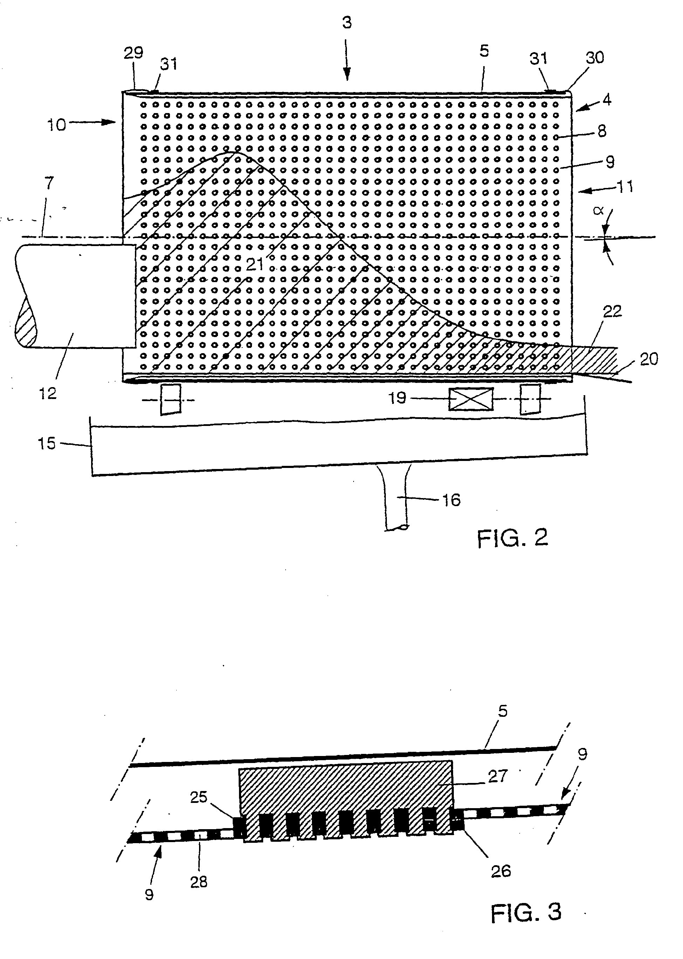

As Fig. 2 clearly demonstrates, the drum filter 3 comprises a drum 4 having a cylindrical outer wall 5. The drum 4 is arranged on, for instance, a number of wheels 6 running on the outer wall 5, so that the drum 4 is rotatable about its longitudinal axis 7. One or a number of the wheels 6 is/are drivable by means of a motor 40. As a matter of fact, other driving means can of course also be provided, such as for instance a motor directly engaging the shaft of the drum, a drive belt or by means of teeth and a gear wheel. In the exemplary embodiment shown in Fig. 2, the longitudinal axis 7 includes an angle a with the horizontal, for reasons that are further described hereinbelow. The outer wall 5 of the drum 4 is provided with rows and columns of holes 8 and has its inside lined with a filtering cloth 9 in a manner further described hereinbelow. This filtering cloth is fine-meshed and is for instance formed by screen-printing cloth. In this connection, screen-printing cloth should be understood to mean monofilament plastic woven cloth, for instance produced from polyester, polyvinylidene difluoride, polyamide, polyethylene terephthalate. The screen-printing cloth has mesh sizes of, for instance, between 1 and 100 mm, preferably between 1 and 25 mm. Such screen-printing cloth is for instance marketed under the registered tradenames of Filtryl and Scrynel. In Fig. 2, the openings 8 in the wall 5 of the drum 4 are shown as if they were visible through the cloth 9. The two ends 10, 11 of the drum 4 are open.

As filtering material, filtering cloth is preferred, but other types of material can be used as well, for instance open cell band-shaped material, (metal) sponge-shaped material, and the like.

Adjacent the first end 10, a first connecting tube 12 connects to the inner space 14 of the drum 4. The first connecting tube 12 has its opposite end connected to the cleaning apparatus 2. Disposed under the drum 4 is a receptacle 15 which connects to a second connecting tube 16 connecting the receptacle 15 to a feed side of the cleaning apparatus 2. In the second connecting tube 16, pump means 17 can be accommodated. Further, accommodated in the first connecting tube 12 is a first control unit 18 (schematically shown in the drawing) for controlling the flow velocity and the throughput in the first connecting tube 12. Further, a second control unit 19 is provided for controlling at least the rotational speed of the drum 4 via the motor 40. The cleaning apparatus 2, the first connecting tube 12, the filter drum 4, the receptacle 15 and the second connecting tube 16 together form or are at least part of a substantially closed circuit. Means can be provided for feeding thereto, from the outside, a new amount of medium and for instance additives such as soap, softening agent, water softeners and the like.

Adjacent the second end 11 of the drum, discharge means 20 are provided for discharging, from the inside of the drum 4, material filtered from the medium. In the exemplary embodiment shown in Fig. 2, these means comprise a plate-shaped part which acts as a slope and prevents material sliding thereacross from the drum 4 from falling into the receptacle 15.

A cleaning assembly 1 according to the invention can be used as follows.

In the cleaning apparatus 2, during use, an amount of laundry is treated by means of, inter alia, water and cleaning agents such as soap. Hence, the water used will contain soap residues, other chemical or non-chemical components, if any, and solid particles such as dirt from the textile and textile fibers. These solid particles should be removed from the water to enable the water used to be reused in the cleaning apparatus 2. Reuse of the water is important particularly because the water may still contain active components and moreover cannot be drained without adverse environmental effects. Further, water is relatively expensive and, moreover, not always directly available to a large extent. Hence, reuse of the water is sensible and profitable both in terms of economy and environment.

Together with an amount of water, soap and other additives, the laundry is introduced into the cleaning apparatus 2 and cleaned therein. Periodically and/or after a set washing program has ended, or if it is established that the laundry is clean or the water too dirty for use, the water used is discharged via the first connecting tube 12. The amount of discharged water and the flow velocity thereof are controlled by means of the first control unit 18. The variables on which this control is based will be specified hereinbelow. At the first end 10, the water flows into the drum 4 on the inside of the cloth 9. The water can pass the cloth 9, but the particles included therein, in particular dirt and fibers, stay behind on the cloth 9.

Hence, an amount of particles slightly adhering to the cloth 9 and to each other gathers on the cloth. In Fig. 2, the particles in the form of dirt and fibers are represented by a hatching. By the water flowing from the first connecting tube 12 into the drum and by the rotation of the drum, possibly helped by gravity, the particle mass 12 is forced in the direction of the second end 11 of the drum, meanwhile incorporating new particles and displacing water outwards, through the cloth 9 and the openings 8 in the wall 5. This water is received in the receptacle 15. Because the particle mass 21 becomes larger and larger and gets a greater density in the direction of the second end of the drum 14, it will come slightly loose from the cloth at any moment and fall in the direction of the bottom of the drum. If the particle mass 21 exhibits a mutually relatively substantial coherence, a string of particles will be formed through the drum 4, which will be roll-shaped adjacent the second end 11, somewhat twisted through friction between the particles and the cloth in the rotating drum 4. Because the particles are displaced further and further in the direction of the second end 11 of the drum, and the water is displaced therefrom further and further, after continuous use a roll-shaped, relatively dry, coherent particle mass 22 issues from the second end 11 of the drum 4, which slides across the slide plate 20 and can be engaged from the outside of the drum 4 and discharged. Viewed in the flow direction of the water (indicated by the arrows P in Fig. 1), less and less water issues from the drum 4, as is indicated by the arrows 24 becoming shorter and shorter. The same effect occurs with particles exhibitng no or at least little coherence, such as for instance sand, which, however, involves no or only a slight extent of roll-formation.

Optionally, for instance cellulose fibers or like adhesive particles can be added to the material to be filtered, prior to filtering out, whereby the adhesion becomes stronger.

Via the second connecting tube 16 and the pump means 17, the water collected in the receptacle 15 is fed back to the cleaning apparatus 2 for reuse. In fact, the pump means may also comprise second filtering means 23 for filtering very small particles from the water. Because the larger particles have already been removed from the water in the filter drum 4, there is no danger of these second filtering means 23 becoming clogged.

A cleaning apparatus 1 according to the invention offers the advantage that a closed circuit is obtained wherein almost all the water used can be reused without requiring particularly complicated cleaning agents or, for instance, additional chemicals. The drum filter employed is almost entirely self-cleaning and requires little maintenance, is relatively cheap to purchase and in use, and provides a particularly effective cleaning of the water.

As appears from Fig. 2, the cloth 9 is provided on the inside of the drum 4. The cloth 9 is tubular. In a first embodiment, this tubular form is obtained by placing two opposite longitudinal edges 25, 26 of a rectangular cloth over each other and interconnecting them, as shown in Fig. 3. The connection shown in Fig. 3 is obtained by positioning a plastic strip 27 in the longitudinal direction of the tube formed by the cloth 9, on top of the overlapping longitudinal edges 25. 26. Then, the plastic strip 27, optionally together with the cloth 9, is heated, causing the plastic of the strip 27 to pass through the meshes 28 in the cloth 9, first through the first longitudinal edge 25 and then through the second longitudinal edge 26. After the plastic has cooled down, a fixed connection is thus obtained. A tubular cloth 9 can of course also be composed of several interconnected cloth parts by interconnecting the longitudinal edges thereof. As a matter of fact, the longitudinal edges can also be connected in a different manner, while in an alternative embodiment, the tubular cloth 9 is obtained through direct tubular manufacture, for instance in the form of a woven stocking. Such an embodiment can offer the advantage that no assembling operations for the cloth 9 itself are required other than during installation in the drum.

After formation of the tubular cloth 9, it is inserted into the drum 4.

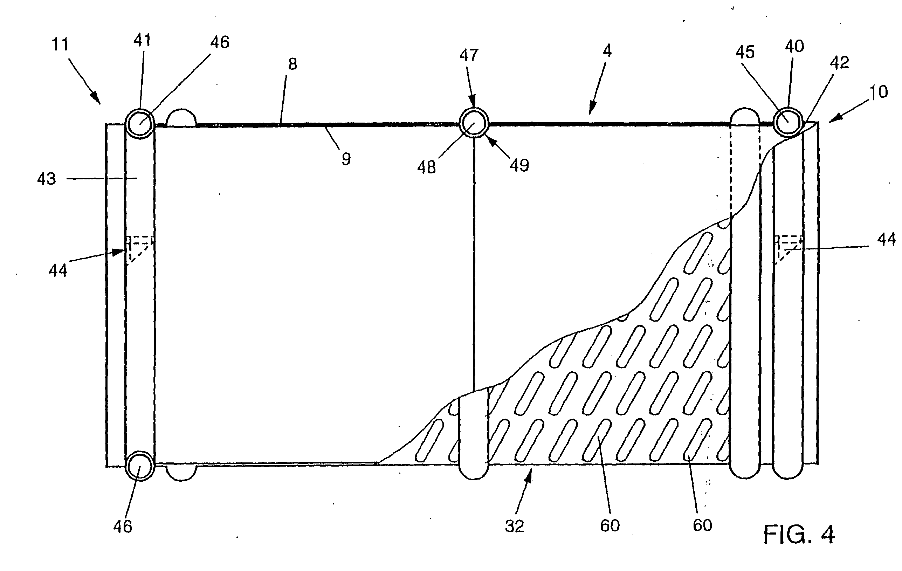

Fig. 4 shows the inventive solution for the fastening of the cloth 9 in the filter drum 4. Adjacent the first end 10 and the second end 11, the (or each) filter drum 4 is provided with an annular groove 40 and 41 respectively. The tubular cloth 9 has its two ends provided with a circular seam 42 and 43 respectively, each having an insertion opening 44. Inserted into the insertion opening 44 in each seam 42, 43 is a tubular or bar-shaped flexible element 45 and 46 respectively, having a length approximately corresponding to the circumference of the seam 42, 43. The section of the flexible element to some extent corresponds to the dimensions of the groove 42, 43 respectively wherein it is to be received. As flexible element, for instance a plastic hose such as a plastic hot-water pipe having some stiffness can be used. In the position wherein the elements are included in the seams 42 and 43 respectively, the ends of each flexible element 45 and 46 respectively abut against each other and these elements 45, 46 each form a ring adjacent the relevant ends 10, 11 of the filter drum.

In such a filter drum 4, the cloth 9 can be mounted as follows.

The filter drum 4 is placed on its first end 10, after which the cloth 9 is introduced into the filter drum 4 with the first ring 45 inside the filter drum 4 and the second ring 46 on the outside thereof. This involves the first ring 45 being slightly compressed. The second ring 46 is then placed on one side in the second groove 41, after which the ring 46 is pressed down so that it has its entire circumference received in the groove 41. Accordingly, the ring 46 is clamped down, together with the cloth 9, in the filter drum 4, at some, preferably slight, distance from the first end 10. Then, the filter drum 4 is turned upside down and placed on the second end 11. The cloth 9 is not included between the filter drum 4 and the ground, so that damages are prevented. Next, the first ring 45 is gripped and pulled upwards to the first end 10 of the filter drum 4, so that this ring 45 is fixed in the first groove 40 at the first end 10. As a result, the tubular cloth 9 in the filter drum 4 is stretched, with the cloth 9 also lying at some, preferably slight, distance from the first end 10 of the filter drum 4.

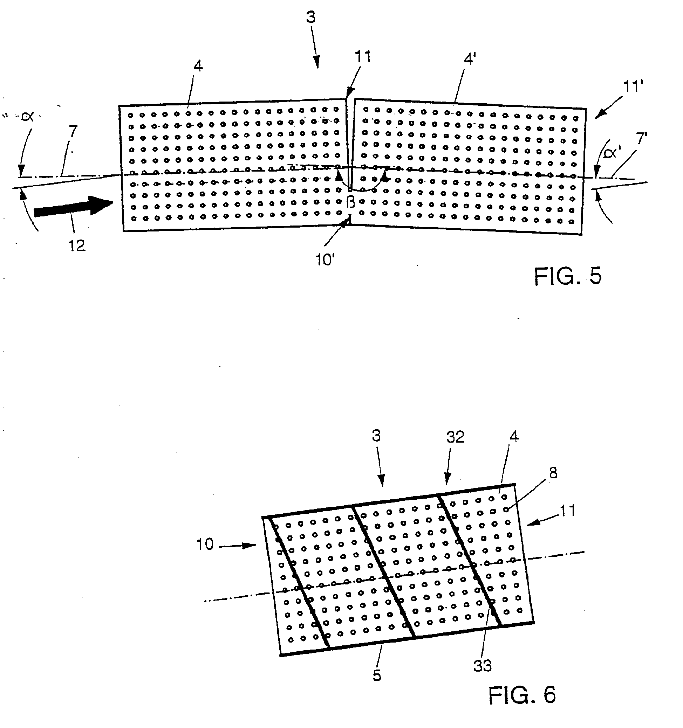

Moreover, as the cloth 9 does not extend over the ends 10, 11 of the filter drum 4, two drums 4, 4' can readily be coupled, as shown in Fig. 5, without involving a risk of damaging.

Further, a groove 47 may also be provided in the central area of a drum 47, and a further flexible element 48 may be provided in a third seam 49 located between the first 42 and the second seam 43, which third seam 49 is can be received in the intermediate groove 47. As a result, the tubular cloth 9 is stretched even better. In fact, more grooves and/or flexible elements can be provided adjacent each other for an even better attachment and stretching of the cloth 9.

In an alternative embodiment, the cloth 9 can be built up from two or more tubular parts, each having a different mesh size. In this connection, it is preferred that the cloth part having the largest meshes lies closer to the second end 11 of the filter drum 4 than the or each other cloth part. Accordingly, during use, water or other medium to be filtered, with a relatively low density of particles, will first end up on the cloth part having the smallest meshes. According as the particles are dewatered further, they will coagulate more and hence be retained by larger meshes. This means that the particles will not fall through the relatively large meshes in the second cloth part, while water will be discharged thereby more easily. Hence, a better, further dewatering or at least drying is obtained while the desired filtering action is maintained. The cloth parts can be interconnected by weld seams or like connections, but may also each comprise annular elements as described with reference to Fig. 4, wherein grooves are provided at suitable positions in the filter drum for fixing these elements. The two methods can also be combined, optionally together with the above-described manner of attachment over one or several end edges. For instance, one drum may comprise several cloth parts and/or different drums may comprise different cloth parts.

Fig. 5 shows an alternative embodiment of a drum filter 3 according to the invention. In that Figure, two filter drums 4, 4' are connected one behind the other, with the second end 11 of the upstream first drum 4 connecting to the first end 10' of the downstream second drum 4'. The longitudinal axes 7, 7' of the two drum include an angle b. As a result, in the exemplary embodiment shown, the gravity in the direction of the second end 11, 11' of the drums 4, 4' respectively will exert a greater influence on the filtered-out material in the second drum 4'. This may be advantageous during use of the drum filter 3, for instance in order to increase the time of passage of the filtered material, in particular when the material has been sufficiently dewatered relatively quickly. In an alternative embodiment (not shown), the angle of inclination a' of the second drum can be smaller than the angle of inclination a of the first drum. This can for instance be advantageous when the filtered material should stay longer in the second drum in order to provide a better dewatering, while in the first drum a relatively quick movement of the material in the conveying direction is desired, for instance to prevent accumulation of material. Of course, it is also possible to arrange several drums one behind the other. Also, some or all axes of rotation 7 of the drums can be in line. An important advantage of a number of drums arranged one behind the other is that by means of relatively short drums 4, a long drum filter 3 can be obtained. Short drums 4 offer the advantage that the manufacture and maintenance thereof are simpler. For instance, the fitting of the filtering cloth 9 can be carried out more simply, and moreover, the drums can be arranged and removed independently of one another. Accordingly, the filtering length of the drum filter can also be adjusted, for instance to the amount of material that is to be filtered out.

When the cloth 9 is mounted according to Fig. 4 in filter drums 4, 4' as shown in Fig. 5, the advantage is achieved that the cloth 9 can extend for instance between two or more drums 4 without seams in between. For that purpose, at the level of the two interconnected ends 11, 10' of two drums 4, 4', the cloth may be provided with intermediate seams wherein flexible elements 45, 46 can also be received. Thus, the cloth 9 is stretched taut in the connected drums 4, 4'.

The speeds and, if necessary, directions of rotation of drums arranged one behind the other may or may not be adapted to, for instance, the ratio of filtered-out material/water and the desired degree of dewatering. As described, by means of the first and the second control unit 18, 19, different variables can be controlled. For instance, the inflow velocity of the water into the drum 4 from the first connecting tube 12 and the throughput thereof can be controlled, while the rotational speed of the drum(s) 4 can be controlled as well. Moreover, it is possible to render the angle of inclination a of the drum 4 adjustable. These parameters can be set on the basis of the average (expected) amount of material to be filtered from the water, the desired degree of dewatering and, on the one hand, the cohesion existing between the material to be filtered out and the water and, on the other, the cohesion within the material itself and between the material and the cloth. These parameters should be set so that all the water that is or becomes clear of the material passes through the cloth 9 and the wall 8 of the drum(s) and is received in the receptacle 15 for reuse or discharge, while under the influence of the flow of the water and/or gravity and/or displacement by new material at the second end of the or the last drum 4, all material is forced from the drum filter 3.

In order to accelerate the propulsion of the material in the drum filter 3, in an alternative embodiment, co-conveying means 32 may be provided within the drum 4, as shown in Fig. 6. These co-conveying means 32 are adapted to force the material in the direction of the second end 11 of the drum 4. In the embodiment shown in Fig. 6, the co-conveying means are formed by a helical wall 33 extending from the inside of the drum 4. The wall may be completely closed or, for instance, have a filtering cloth stretched thereon, which cloth is comparable with the cloth 9 stretched on the inside of the drum 4. In such an embodiment, the water will be able to pass the wall 33 while the particles included therein will be retained by the wall 33. As a matter of fact, the co-conveying means 32 can of course also be formed in another manner, for instance by a conveyor screw extending along the inside of the drum 4 and for instance rotated independently of the drum. Moreover, a stationary arrangement of the conveyor screw may be opted for. In both embodiments, a least a part of the conveying action is obtained through the relative movement of the drum relative to the conveyor screw. Fig. 4 schematically shows an alternative embodiment of the co-conveying means 32. A large number of inwardly extending recesses 60 have been provided in the wall 8, which recesses all have the same inclined position relative to the longitudinal axis of the filter drum 4. Consequently, when the cloth is pressed against the wall 8, bumps are formed in the screening cloth 9, which have a conveying effect on the filtered particles. This embodiment is advantageous because the inside of the filter drum remains clear and damages to the cloth 9 are easily prevented, while the recesses 60 can readily be provided, preferably in the still flat sheet from which the drum 4 is manufactured.

The recesses moreover have the advantage that a quicker dewatering of the material is obtained thereby, because water or at least liquid is retained therebehind and displaced outwardly instead of entrained in a rotational sense. This effect is greater according as the recesses extend more in axial direction. As a matter of fact, the bumps in the screening cloth 9 can also be obtained through elements, such as small bars, plates or the like, provided between the cloth 9 and the drum wall 8.

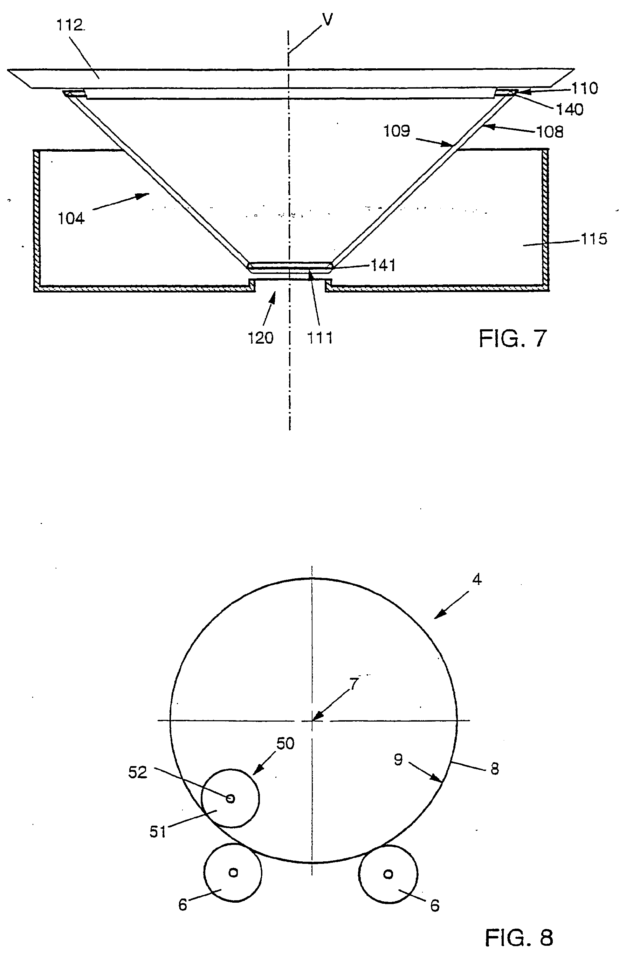

Fig. 7 shows an alternative embodiment of a cleaning apparatus according to the invention. Identical parts have identical reference numerals, increased by one hundred.

In this embodiment, the cleaning apparatus comprises a frusto-conical filter drum 104, arranged for rotation about a vertical axis of rotation V. The upper, first end 110 is formed by the large-section end of the filter drum 104 and is approximately horizontal. The wall 108 of the filter drum 104 includes an angle with the vertical of, preferably, between 20° and 70°, for instance 45°. The feed means 112 are formed by an overflow extending around the entire circumference of the first end 110. In this embodiment, the advantage is achieved that the entire surface of the filtering cloth 109 can be used for filtering the medium, while, moreover, the section of the filter drum decreases according as the share of liquid decreases. Thus, an optimum drying is obtained, while the cleaning apparatus has a relatively great capacity.

A further advantage of such an embodiment is that the filtered-out particles are moved downwards along the cloth 109, partly under the inlfuence of gravity, so that clogging of the filter drum 104, in particular of the meshes in the filtering cloth 109, is prevented even more efficiently and easily.

As a matter of fact, the axis of rotation may of course also include a small angle with the vertical without the above-described advantages being lost, while for the discharge of particles that are preferably joined together into a roll, this provides a preferred position, viz. adjacent the lowest position of the longitudinal edge of the second end 11 of the filter drum 104.

The receptacle 115 is provided with a central opening 120 through which the filtered-out particles can be discharged, while the receptacle 115 further extends at least under the entire wall 108 of the filter drum 104.

Fig. 8 schematically shows a further advantageous embodiment of a filter drum 4 according to the invention, with a friction means 50 arranged against the cloth 9 in the filter drum 4. In the embodiment shown, the friction means 50 is formed by a roll 51 having a relatively rough, soft surface, for instance towelling. By a longitudinal axis 52, the roll 51 extends approximately parallel to the axis of rotation of the filter drum 4, over the length thereof, and has a section which is considerably smaller than that of the filter drum 4. Preferably, the roll 51 in the filter drum 4 can freely rotate about its longitudinal axis 52, preferably caused by friction against the cloth 9 in the filter drum 4.

During use, particles are moved along upwards by the cloth 9 and contact the roll 51, which cannot be passed by the particles. This results in an accumulation of particles against the roll 51, until the particles form a coherent whole and/or are forced downwards and backwards, whether or not in the form of a string as described hereinabove, by gravity and the feed of new particles. The roll 51 or at least the friction means partly provide that the cleaning apparatus can continue functioning for a long time without requiring maintenance.

The roll 51 can be suspended or laid down for free rotation, but is preferably brakable or drivable, with the distance to the cloth and the position in the filter drum 41 moreover being adjustable.

As indicated, in particular in the introduction and at the outset of the description of the drawings, an apparatus according to the invention can also be used for filtering or cleaning gases, more particularly gas flows. In this connection, it is preferred that the gases be sucked or pressed through the cloth and the drum wall by means of a pressure difference between the inside and the outside of the drum. For that purpose, next to or instead of the receptacle, a reduced-pressure tank can be accommodated or an exhaust apparatus drawing in the gases. Alternatively, the gas flow can be fed under such a pressure that it is forced through the cloth and the wall. When a filtering apparatus according to the invention is used for filtering gas flows, advantages are achieved that are comparable with those of liquid cleaning.

Hereinabove, it is described that the complete amount of fluid to be filtered is introduced into the drum adjacent one end thereof. However, it is of course also possible to introduce a part or the complete flow of fluid adjacent a central area of the drum, for instance via a feed tube extending into the drum.

Further, different drums can be arranged one within the other, for instance coaxially, with the drums all filtering a portion of the material from the fluid. In that connection, for instance the mesh size of the filtering cloth may decrease in the direction of the outermost drum, so that, viewed outwards from the inside, each next drum filters out finer particles.

The invention is by no means limited to the embodiments shown and described in the drawings and specification. Many variations thereto are possible.

The or each drum of the drum filter may for instance be of double-walled design, with the inner wall being perforated and the outer wall not being perforated. In such an embodiment, the fluid is discharged between the inner and outer walls in the direction of the second end of the drum. As a result, a relatively small receptacle may suffice, while the or each drum is closed on the outside, so that the environment of the drum filter can easily be kept clean and dry. Further, a number of cleaning apparatuses can be connected to one drum filter, or a number of drum filters can be connected to one cleaning apparatus. Also, a number of drum filters can be diposed one behind the other for successively filtering other fractions. In such an embodiment, the fluid coming from a first receptacle is fed to the drum of a drum filter lying behind it and having for instance a cloth of finer mesh, for filtering out finer particles. Also, a drum filter according to the invention can be combined with filtering apparatuses known per se for other solid particles or, for intance, chemicals, and a cleaning apparatus according to the invention can be used for cleaning other liquids or gases or for other types of particles from, for instance, water or gases. Further, different measuring means can of course be included for registering quantities for the (semi)automatic control of the operation of the cleaning assembly, and means can be provided for the accelerated discharge of the fluid. For instance, the or each drum can be disposed under a vacuum.

## Claims

1. A filter drum having a cylindrical outer wall provided with openings and lined on the inside with filter material, said drum having a first and an opposite second end, which second end is substantially open, wherein the filter material is provided on the inside of the drum adjacent the outer wall, said filtering material being fine-meshed and adapted to pass fluid to be filtered and to filter solid particles therefrom whereby during use filtered fluid can leave the drum at least through said outer wall, wherein the filter material extends along substantially the entire inside of the drum, wherein, adjacent the ends of the drum, at least one groove is formed extending in annular direction, **characterized in that** clamping means are provided for clamping the filter material in at least one groove adjacent each end of the drum, wherein the filter material is provided, at the two ends thereof, with at least one seam, wherein the clamping means comprise at least two bar-shaped or tubular flexible elements, wherein in each seam one of the flexible elements can be received for forming a ring having a diameter approximately corresponding to the diameter of the filter material and the grooves

2. A filter drum according to claim 1, **characterized in that** the filter material is fine-meshed suitable during use, for the individual solid particles to substantially adhere to the inside of the filter material and/or one another and become detached therefrom while forming a relatively dry roll-shaped or plate-shaped composition of filtered-out particles and suitable for the composition of particles to extend in the longitudinal direction of the drum beyond the second end of the drum and to be removed therefrom via the second end of the drum.

3. A filter drum according to claim 1 or 2, **characterized in that** the filter material is screen-printing cloth, in particular monofilament plastic woven cloth.

4. A filter drum according to any one of claims 1-3, **characterized in that** the filter material is manufactured from a substantially rectangular piece of cloth, wherein two sides, lying opposite each other in the starting position, are interconnected by means of a plastic strip which, while abutting against the two longitudinal edges, is heated so that a portion thereof has passed through the meshes of the filter material and is fixed therein to couple the two longitudinal edges and form a tubular lining.

5. A filter drum according to any one of claims 1-4, **characterized in that** the filter material is manufactured so as to be tubular.

6. A filter drum according to any one of claims 1-5, **characterized in that** the drum is manufactured from perforated sheet, wherein the side facing the perforating tool during the perforation faces inwards, so that the slightly depressed edges of the perforations extend outwardly.

7. A filter drum according to any one of claims 1-6 **characterized in that** the drum is not cylindrical, but frusto-conical.

8. A filter drum according to any one of claims 1-7, **characterized in that** within the drum means are included for, during use, co-conveying the material filtered from the fluid in the direction of the second end.

9. A filter drum according to claim 8, **characterized in that** the means for co-conveying the material is a relatively soft roll element which extends substantially axially and, during use, abuts against the inside of the filter material.

10. A filter drum according to claim 8, **characterized in that** the means for co-conveying the material comprise an at least partly helical wall extending at least along a portion of the inner wall of the or each drum.

11. A filter drum according to claim 8, **characterized in that** the helical wall is at least partly lined with filtering cloth.

12. A filter drum according to anyone of claims 1-11, wherein elements are provided between said filter material and the drum wall.

13. A filter drum according to anyone of claims 1-12, wherein the filter material has mesh sizes between 1 and 100mm, preferably between 1 and 25mm.

14. A filter drum according to anyone of the preceding claims, wherein the drum is not cylindrical, but substantially of conical shape.

15. A cleaning assembly, comprising at least one drum filter according to any one of claims 1-14, at least one cleaning apparatus for cleaning objects, for instance textile, by means of a (liquid medium) fluid, in particular liquid or gases, receiving means for fluid passing from the or each drum filter, first connecting means for feeding fluid, contaminated by solid particles, from the or each cleaning apparatus to the at least one drum filter, and second connecting means for feeding cleaned fluid coming from the or a drum filter to the or a cleaning apparatus, wherein the first connecting means connect to the inside of the drum of at least one drum filter, wherein the second connecting means connect to the receiving means, wherein the cleaning means, the or each drum filter and the first and second connecting means are included in a substantially closed path of flow.

16. A method for filtering solid particles from a fluid, wherein a flow of fluid is fed to a filter drum according to any one of claims 1-12, which filter drum comprises a screening wall passing the fluid and is rotated about a longitudinal axis including an angle with the vertical, wherein the fluid is discharged at least partly via the wall of the filter drum, **characterized in that** the fluid is fed to the inside of the filter drum adjacent one end thereof, wherein the drum has its inside provided with a fine-meshed filter material, in particular cloth through which the fluid passes outside while the solid particles are substantially retained by the filter material, wherein the drum is rotated at a speed so that the particles deposit on the filter material and/or one another, wherein the deposited particles move, under the influence of at least the flow of fluid, in the direction of the second end of the drum and are freed from the fluid, after which the particles are removed relatively dry via the second end.

17. A method according to claim 16, **characterized in that** the particles within the drum form a slightly roll-shaped composition which extends beyond the second end of the drum and is removed as such via the second end.

18. A method according to claim 16 or 17, **characterized in that**, during use, the longitudinal axis of the filter drum is slightly inclined in the direction of the second end of the filter drum, wherein the roll-shaped composition is moved, at least partly under the influence of gravity, in the direction of the second end of the drum.

19. A method according to any one of claims 16-18, **characterized in that** the flow velocity and amount of the fluid flowing in the drum are adjusted to at least the length and rotational speed of the filter drum so that substantially all fluid leaves the drum via the wall and only the particles pass from the second end.

20. A method according to claims 16-19, **characterized in that** friction means are included on the inside of the drum which, during use, are moved along the fine-meshed cloth, preferably rolling, so that particles carried along by the cloth are moved against the friction means and are retained in rotational sense, so that the particles are moved in the direction of the second end of the drum.

## Patentansprüche

1. Filtertrommel mit einer zylindrischen Außenwand, die mit Öffnungen versehen und auf der Innenseite mit Filtermaterial ausgekleidet ist, wobei die Trommel ein erstes und ein entgegengesetztes zweites Ende aufweist, das im wesentlichen offen ist, wobei das Filtermaterial auf der Innenseite der Trommel nahe der Außenwand vorgesehen ist, wobei das Filtermaterial feinmaschig ist und eingerichtet ist, zu filterndes Fluid durchzulassen sowie Festpartikel aus diesem zu filtern, wodurch im Gebrauch gefiltertes Fluid die Trommel zumindest durch die Außenwand verlassen kann, wobei sich das Filtermaterial über im wesentlichen die gesamte Innenseite der Trommel erstreckt, wobei nahe den Enden der Trommel zumindest eine sich kreisförmig erstreckende Rille gebildet ist, **dadurch gekennzeichnet, dass** Klemmeinrichtungen vorgesehen sind, um das Filtermaterial in zumindest einer Rille nahe jedem Ende der Trommel zu klemmen, wobei das Filtermaterial an seinen beiden Enden mit mindestens einem Saum versehen ist, wobei die Klemmeinrichtungen mindestens zwei stangenförmige oder rohrförmige flexible Elemente aufweisen, wobei in jedem Saum eines der flexiblen Elemente aufgenommen werden kann, um einen Ring mit einem Durchmesser zu bilden, der annähernd dem Durchmesser des Filtermaterials und der Rillen entspricht.

2. Filtertrommel nach Anspruch 1, **dadurch gekennzeichnet, dass** das Filtermaterial feinmaschig ist, so dass es im Gebrauch dazu geeignet ist, dass die einzelnen Festpartikel im wesentlichen an der Innenseite des Filtermaterials und/oder aneinander haften und sich unter Bildung einer relativ trockenen walzenförmigen oder plattenförmigen Zusammensetzung aus ausgefilterten Partikeln davon lösen, und dass es geeignet ist, dass sich die Partikelzusammensetzung in Längsrichtung der Trommel über das zweite Ende der Trommel hinaus erstreckt und aus dieser über das zweite Ende der Trommel entfernbar ist.

3. Filtertrommel nach Anspruch 1 oder 2, **dadurch gekennzeichnet, dass** das Filtermaterial Siebdruckstoff ist, insbesondere ein monofiles Kunststoffgewebe.

4. Filtertrommel nach einem der Ansprüche 1-3, **dadurch gekennzeichnet, dass** das Filtermaterial aus einem im wesentlichen rechteckigen Stück Stoff hergestellt ist, wobei zwei in der Ausgangsposition einander gegenüberliegende Seiten durch einen Kunststoffstreifen miteinander verbunden sind, welcher während er an den beiden Längsrändern anliegt, derart erwärmt wird, dass ein Teil desselben durch die Maschen des Filtermaterials gedrungen ist und in diesem fixiert ist, um die beiden Längsränder zu verbinden und eine rohrförmige Auskleidung zu bilden.

5. Filtertrommel nach einem der Ansprüche 1-4, **dadurch gekennzeichnet, dass** das Filtermaterial rohrförmig hergestellt ist.

6. Filtertrommel nach einem der Ansprüche 1-5, **dadurch gekennzeichnet, dass** die Trommel aus perforiertem Blech hergestellt ist, wobei die dem Perforationswerkzeug während des Perforierens zugewandte Seite nach innen gerichtet ist, so dass die geringfügig eingedrückten Ränder der Perforationen sich nach außen erstrecken.

7. Filtertrommel nach einem der Ansprüche 1-6, **dadurch gekennzeichnet, dass** die Filtertrommel nicht zylindrisch, sondern kegelstumpfförmig ist.

8. Filtertrommel nach einem der Ansprüche 1-7, **dadurch gekennzeichnet, dass** in der Trommel eine Einrichtung vorgesehen ist, um im Gebrauch das aus dem Fluid gefilterte Material mit in Richtung des zweiten Endes zu fördern.

9. Filtertrommel nach Anspruch 8, **dadurch gekennzeichnet, dass** die Einrichtung zum Mitfördern des Materials ein relativ weiches Walzenelement ist, das sich im wesentlichen axial erstreckt und im Gebrauch an der Innenseite des Filtermaterials anliegt.

10. Filtertrommel nach Anspruch 8, **dadurch gekennzeichnet, dass** die Einrichtung zum Mitfördern des Materials eine zumindest teilweise schraubenlinienförmige Wand ist, die sich zumindest entlang eines Teils der Innenwand jeder Trommel erstreckt.

11. Filtertrommel nach Anspruch 8, **dadurch gekennzeichnet, dass** die schraubenlinienförmige Wand zumindest teilweise mit Filterstoff ausgekleidet ist.

12. Filtertrommel nach einem der Ansprüche 1 - 11, **dadurch gekennzeichnet, dass** Elemente zwischen dem Filtermaterial und der Trommelwand vorgesehen sind.

13. Filtertrommel nach einem der Ansprüche 1- 12, **dadurch gekennzeichnet, dass** das Filtermaterial Maschengrößen zwischen 1 und 100 mm, vorzugsweise zwischen 1 und 25 mm aufweist.

14. Filtertrommel nach einem der vorhergehenden Ansprüche, **dadurch gekennzeichnet, dass** die Trommel nicht zylindrisch, sondern im wesentlichen konisch geformt ist.

15. Reinigungsanordnung mit mindestens einem Trommelfilter nach einem der Ansprüche 1-14, mindestens einer Reinigungsvorrichtung zum Reinigen von Objekten, zum Beispiel Textilien, mittels eines (flüssigen Mediums) Fluids, insbesondere Flüssigkeit oder Gase, einer Aufnahmeeinrichtung für von dem oder jedem Trommelfilter kommendes Fluid, einer ersten Verbindungseinrichtung zum Zuführen von Fluid, das durch Festpartikel kontaminiert ist, von der oder jeder Reinigungsvorrichtung zu dem wenigstens einen Trommelfilter, und einer zweiten Verbindungseinrichtung zum Zuführen von gereinigtem Fluid, das von dem oder einem Trommelfilter kommt, zu der oder einer Reinigungsvorrichtung, wobei die erste Verbindungseinrichtung mit der Innenseite der Trommel wenigstens eines Trommelfilters verbunden ist, wobei die zweite Verbindungseinrichtung mit der Aufnahmeeinrichtung verbunden ist, wobei die Reinigungseinrichtung, der oder jeder Trommelfilter und die erste und die zweite Verbindungseinrichtung in einem im wesentlichen geschlossenen Strömungsweg enthalten sind.

16. Verfahren zum Filtern von Festpartikeln aus einem Fluid, bei dem eine Fluidströmung einer Filtertrommel nach einem der Ansprüche 1-12 zugeführt wird, wobei die Filtertrommel eine Siebwand aufweist, welche das Fluid passiert, und um eine Längsachse gedreht wird, die einen Winkel mit der Vertikalen bildet, wobei das Fluid zumindest teilweise über die Wand der Filtertrommel ausgelassen wird, **dadurch gekennzeichnet, dass** das Fluid der Innenseite der Filtertrommel nahe einem ihrer Enden zugeführt wird, wobei das Innere der Trommel mit einem feinmaschigen Material, insbesondere Stoff, versehen ist, durch welches das Fluid nach außen strömt, während die Festpartikel im wesentlichen durch das Filtermaterial zurückgehalten werden, wobei die Trommel mit einer derartigen Geschwindigkeit gedreht wird, dass sich die Partikel an dem Filtermaterial und/oder aneinander ablagern, wobei die abgelagerten Partikel sich unter Einwirkung zumindest der Fluidströmung in Richtung des zweiten Endes der Trommel bewegen und von Fluid befreit werden, woraufhin die Partikel relativ trocken über das zweite Ende entfernt werden.

17. Verfahren nach Anspruch 16, **dadurch gekennzeichnet, dass** die Partikel innerhalb der Trommel eine geringfügig walzenförmige Zusammensetzung bilden, die sich über das zweite Ende der Trommel hinaus erstreckt und als solche über das zweite Ende entfernt wird.

18. Verfahren nach Anspruch 16 oder 17, **dadurch gekennzeichnet, dass** im Gebrauch die Längsachse der Filtertrommel geringfügig in Richtung des zweiten Endes der Filtertrommel geneigt ist, wobei die walzenförmige Zusammensetzung zumindest teilweise unter Einwirkung der Schwerkraft in Richtung des zweiten Endes der Trommel bewegt wird.

19. Verfahren nach einem der Ansprüche 16-18, **dadurch gekennzeichnet, dass** die Strömungsgeschwindigkeit und die Menge des in der Trommel fließenden Fluids zumindest and die Länge und die Drehzahl der Filtertrommel derart angepasst sind, dass im wesentlichen sämtliches Fluid die Trommel über die Wand verlässt und nur die Partikel aus dem zweiten Ende herausgelangen.

20. Verfahren nach einem der Ansprüche 16-19, **dadurch gekennzeichnet, dass** Reibeinrichtungen auf der Innenseite der Trommel vorgesehen sind, welche im Gebrauch entlang des feinmaschigen Stoffs bewegt, vorzugsweise gerollt, werden, so dass von dem Stoff mitgenommene Partikel gegen die Reibungseinrichtungen bewegt werden und in Drehrichtung zurückgehalten werden, so dass die Partikel in Richtung des zweiten Endes der Trommel bewegt werden.

## Revendications

1. Tambour de filtre comprenant une paroi extérieure cylindrique pourvue d'ouvertures et garnie sur l'intérieur de matériau de filtre, ledit tambour comprenant une première et une deuxième extrémités opposées, laquelle deuxième extrémité est sensiblement ouverte, dans lequel le matériau de filtre est prévu sur l'intérieur du tambour adjacent à la paroi extérieure, ledit matériau de filtrage étant à mailles fines et adapté pour transmettre du fluide devant être filtré et pour filtrer des particules solides à partir de celui-ci moyennant qui pendant l'utilisation, le fluide filtré peut quitter le tambour au moins à travers ladite paroi extérieure, dans lequel le matériau de filtre s'étend le long sensiblement de l'intérieur entier du tambour, dans lequel, adjacente aux extrémités du tambour, au moins une rainure est formée s'étendant dans un sens annulaire, **caractérisé en ce que** des moyens de serrage sont prévus pour serrer le matériau de filtre dans au moins une rainure adjacente à chaque extrémité du tambour, dans lequel le matériau de filtre est pourvu, au niveau des deux extrémités de celui-ci, d'au moins un joint, dans lequel les moyens de serrage comprennent au moins deux éléments flexibles en forme de barre ou tubulaires, dans lequel dans chaque joint un des éléments flexibles peut être reçu pour former une bague ayant un diamètre correspondant approximativement au diamètre du matériau de filtre et des rainures.

2. Tambour de filtre selon la revendication 1, **caractérisé en ce que** le matériau de filtre est à mailles fines adapté pendant l'utilisation, pour que les particules solides individuelles adhèrent sensiblement à l'intérieur du matériau de filtre et/ou les unes aux autres et se détachent de cela tout en formant une composition en forme de rouleau ou en forme de plaque relativement sèche de particules filtrées et adapté pour que la composition de particules s'étende dans le sens longitudinal du tambour au-delà de la deuxième extrémité du tambour devant être retiré de là par l'intermédiaire de la deuxième extrémité du tambour.

3. Tambour de filtre selon la revendication 1 ou 2, **caractérisé en ce que** le matériau de filtre est un tissu de sérigraphie, en particulier un tissu tissé plastique monofilament.

4. Tambour de filtre selon l'une quelconque des revendications 1 à 3, **caractérisé en ce que** le matériau de filtre est fabriqué à partir d'un morceau sensiblement rectangulaire de tissu, dans lequel deux côtés, reposant opposés l'un à l'autre dans la position de démarrage, sont interconnectés au moyen d'une bande de plastique qui, tout en venant en butée contre les deux bords longitudinaux, est chauffée de sorte qu'une partie de celle-ci est transmis à travers les mailles du matériau de filtre et est fixée dedans pour coupler les deux bords longitudinaux et former un garnissage tubulaire.

5. Tambour de filtre selon l'une quelconque des revendications 1 à 4, **caractérisé en ce que** le matériau de filtre est fabriqué de manière à être tubulaire.

6. Tambour de filtre selon l'une quelconque des revendications 1 à 5, **caractérisé en ce que** le tambour est fabriqué à partir d'une feuille perforée, dans lequel le côté faisant face à l'outil de perforation pendant la perforation est orienté vers l'intérieur, de sorte que les bords légèrement enfoncés des perforations s'étendent vers l'extérieur.

7. Tambour de filtre selon l'une quelconque des revendications 1 à 6, **caractérisé en ce que** le tambour n'est pas cylindrique mais tronconique.

8. Tambour de filtre selon l'une quelconque des revendications 1 à 7, **caractérisé en ce que** dans le tambour des moyens sont compris pour, pendant l'utilisation, transporter conjointement le matériau filtré provenant du fluide dans le sens de la deuxième extrémité.

9. Tambour de filtre selon la revendication 8, **caractérisé en ce que** les moyens pour transporter conjointement le matériau est un élément de cylindre relativement souple qui s'étend sensiblement dans le sens axial et, pendant l'utilisation, vient en butée contre l'intérieur du matériau de filtre.

10. Tambour de filtre selon la revendication 8, **caractérisé en ce que** les moyens pour transporter conjointement le matériau comprennent une paroi au moins partiellement hélicoïdale s'étendant au moins le long d'une partie de la paroi intérieure du ou de chaque tambour.

11. Tambour de filtre selon la revendication 8, **caractérisé en ce que** la paroi hélicoïdale est au moins partiellement garnie avec un tissu de filtrage.

12. Tambour de filtre selon l'une quelconque des revendications 1 à 11, dans lequel des éléments sont fournis entre ledit matériau de filtre et la paroi de tambour.

13. tambour de filtre selon l'une quelconque des revendications 1 à 12, dans lequel le matériau de filtre présente des tailles de maille entre 1 et 100 mm, de préférence entre 1 et 25 mm.

14. Tambour de filtre selon l'une quelconque des revendications précédentes, dans lequel le tambour n'est pas cylindrique mais de forme sensiblement conique.

15. Ensemble de nettoyage, comprenant au moins un filtre à tambour selon l'une quelconque des revendications 1 à 14, au moins un dispositif de nettoyage destiné à nettoyer des objets, par exemple, un textile, au moyen d'un fluide (milieu liquide), en particulier un liquide ou des gaz, des moyens de réception pour le fluide passant depuis le ou chaque filtre à tambour, des premiers moyens de connexion pour amener le fluide, contaminé par des particules solides, depuis le ou chaque dispositif de nettoyage vers le au moins filtre à tambour, et des deuxièmes moyens de connexion pour amener le fluide nettoyé provenant du ou d'un filtre à tambour vers le ou un dispositif de nettoyage, dans lequel les premiers moyens de connexion se raccordent à l'intérieur du tambour d'au moins un filtre à tambour, dans lequel les deuxièmes moyens de connexion se raccordent aux moyens de réception, dans lequel les moyens de nettoyage, le ou chaque filtre tambour et les premiers et deuxièmes moyens de connexion sont compris dans un chemin d'écoulement sensiblement fermé.

16. Procédé de filtrage de particules solides depuis un fluide, dans lequel un écoulement de fluide est amené vers un tambour de filtre selon l'une quelconque des revendications 1 à 12, lequel tambour de filtre comprend une paroi de tamisage passant le fluide et est tourné autour d'un axe longitudinal comprenant un angle avec la verticale, dans lequel le fluide est refoulé au moins partiellement par l'intermédiaire de la paroi du tambour de filtre, **caractérisé en ce que** le fluide est amené vers l'intérieur du tambour de filtre adjacent à une extrémité de celui-ci, dans lequel le tambour présente son intérieur pourvu d'un matériau de filtre à mailles fines, en particulier un tissu à travers lequel le fluide passe à l'extérieur tandis que les particules solides sont sensiblement retenues par le matériau de filtre, dans lequel le tambour est tourné à une vitesse de sorte que les particules se déposent sur le matériau de filtre et/ou les unes sur les autres, dans lequel les particules déposées se déplacent, sous l'influence d'au moins d'écoulement de fluide, dans le sens de la deuxième extrémité du tambour et sont libérées du fluide, après quoi les particules sont retirées relativement sèches par l'intermédiaire de la deuxième extrémité.

17. Procédé selon la revendication 16, **caractérisé en ce que** les particules dans le tambour forment une composition légèrement en forme de cylindre qui s'étend au-delà de la deuxième extrémité du tambour et est retirée en tant que telle par l'intermédiaire de la deuxième extrémité.

18. Procédé selon la revendication 16 ou 17, **caractérisé en ce que**, pendant l'utilisation, l'axe longitudinal du tambour de filtre est légèrement incliné dans le sens de la deuxième extrémité du tambour de filtre, dans lequel la composition en forme de cylindre est déplacée, au moins partiellement sous l'influence de la gravité, dans le sens de la deuxième extrémité du tambour.

19. Procédé selon l'une quelconque des revendications 16 à 18, **caractérisé en ce que** la vitesse d'écoulement et la quantité du fluide qui s'écoule dans le tambour sont ajustées à au moins la longueur et la vitesse de rotation du tambour de filtre de sorte que sensiblement tout le fluide quitte le tambour par l'intermédiaire de la paroi et seules les particules passent depuis la deuxième extrémité.

20. Procédé selon les revendications 16 à 19, **caractérisé en ce que** des moyens de friction sont compris sur l'intérieur du tambour qui, pendant l'utilisation, sont déplacés le long du tissu à mailles fines, de préférence en roulant, de sorte que les particules transportées par le tissu sont déplacées contre les moyens de friction et sont retenues dans le sens de rotation, de sorte que les particules sont déplacées dans le sens de la deuxième extrémité du tambour.
